# EUROPEAN PATENT SPECIFICATION

(11) **EP 3 716 399 B1**
(45) Date of publication and mention of the grant of the patent: **25.09.2024**
(21) Application number: 18889927.2
(22) Date of filing: 10.12.2018
(51) Int. Cl.: H01Q 1/24, H01Q 21/24, H01Q 19/10, H01Q 21/28, H01Q 21/29, H01Q 25/00, H01Q 3/24, H04B 7/10

(54) **ANTENNA APPARATUS AND COMMUNICATION APPARATUS**
ANTENNENVORRICHTUNG UND KOMMUNIKATIONSVORRICHTUNG
APPAREIL D'ANTENNE ET APPAREIL DE COMMUNICATION

(30) Priority: 11.12.2017 CN 201711311229
(43) Date of publication of application: 30.09.2020
(73) Proprietor: HUAWEI TECHNOLOGIES CO., LTD., Shenzhen, Guangdong 518129 (CN)
(72) Inventor: XIONG, Wei, Shenzhen, Guangdong 518129 (CN); XIE, Bo, Shenzhen, Guangdong 518129 (CN); CHENG, Zhulin, Shenzhen, Guangdong 518129 (CN); HE, Qiang, Shenzhen, Guangdong 518129 (CN); LI, Yongjiu, Shenzhen, Guangdong 518129 (CN)
(74) Representative: MERH-IP Matias Erny Reichl Hoffmann Patentanwälte PartG mbB
(86) International application number: PCT/CN2018/120141
(87) International publication number: WO 2019/114669

(56) References cited:
- WO-A1-2012/043945
- CN-A- 103 326 133
- CN-A- 107 394 346
- CN-Y- 2 727 987
- US-A- 6 101 174
- US-A1- 2003 161 410
- US-A1- 2008 293 451
- US-A1- 2015 256 213
- US-A1- 2017 079 001
- US-B1- 8 779 998

## Description

### TECHNICAL FIELD

This application relates to the field of antenna technologies, and in particular, to an antenna apparatus and a communications apparatus.

### BACKGROUND

US 2015/256213 A1 mentions a radio-frequency transceiver system adapted to a wireless local area network that includes an antenna set, including a plurality of antenna units disposed toward a plurality of directions, a radio-frequency signal processing module for processing radio-frequency signals, and a switching module electrically coupled between the antenna set and the radio frequency signal processing module for switching between different connection states of the radio-frequency signal processing module and the antenna units of the antenna set, such that the radio-frequency transceiver system switches between an omnidirectional mode and a directional mode. WO 2012/043945 A1 discloses a method for determining an antenna in a terminal which includes a plurality of non-directional antennas. The antenna determination method may comprise the steps of: performing a measurement on a reference signal from one or more cells through the plurality of non-directional antennas at an initial state; selecting a cell on the basis of a measured value; selecting an antenna to be used for transmission and reception among the plurality of non-directional antennas on the basis of the measured value; monitoring whether or not a long-term timer has elapsed; and again performing the measurement step, the cell selection step, and the antenna selection step when the long-term timer has elapsed.

Further, an arrangement is mentioned in US 2003/161410 A1 to reduce costs in multiple-input multiple-out put (MIMO) and other wireless communication systems, whereby adaptive combination is used at a user equipment in order to produce two or more directional antenna beams.

In US 6 101 174 A, a point-to-multipoint or two-way communications system is provided by a nodal transmitter located in a node with a plurality of nodal antennas radiating different polarization signals about the node. The system includes subscriber stations with directional antennas adapted to receive signals radiated from the nodal transmitter. The system may additionally include capability for transmitting and radiating subscriber signals to the nodal transmitter location for two-way communications.

In addition, US 2008/293451 A1 describes an antenna installation for cellular radio, which has four antennas ANT 1A, ANT 1B, ANT 2 and ANT 3 mounted on respective sides of a rectangular support and giving rise to four antenna coverage sectors 1A and 1B and sectors 2 and 3. A splitter/combiner unit (SCU) receives three signals 1, 2 and 3 from a base station, and splits signal 1 into two signals 1A and 1B of equal power. The splitter/combiner acts as a splitter in transmit mode and a combiner in receive mode. The signals 1A, 1B, 2 and 3 are connected to antennas ANT 1A, ANT 1B, ANT 2 and ANT 3 respectively. Split signal antennas ANT 1A and ANT 1B carrying the same transmit signal are not adjacent to one another: they are separated from one another by another sector associated with a different signal, and therefore do not overlap sufficiently to affect communications significantly.

With development of internet services, people have an increasingly high requirement for broadband internet access. In some places, because it is inconvenient to deploy cables (optical fibers, copper cables, and the like) or deployment costs are relatively high, many operators use wireless broadband technologies to resolve a problem of internet access of users. In some rural and remote areas, populations are relatively sparse. Therefore, usually, a distance between base stations deployed by operators in these areas is relatively large, and a customer premise equipment (Customer Premise Equipment, CPE) with a high-gain antenna is selected and deployed at a user's home, to ensure user experience in a wide coverage scenario.

An outdoor terminal needs to be aligned with a base station when being installed. Currently, a design with a directional antenna is commonly used to improve a gain, so that installation personnel need to have professional capabilities to align a main lobe of the directional antenna with the base station to achieve optimal performance. Therefore, if alignment is not required during installation, usually a CPE uses a design with an omnidirectional antenna. However, a gain of the omnidirectional antenna is relatively low, leading to reduction of antenna performance. If an outdoor terminal uses a rotatable directional antenna, a built-in motor is needed to drive the antenna to rotate to an optimal direction. Because of existence of the built-in motor, a size of the outdoor terminal is increased. This makes installation more difficult. In addition, rotation of the built-in motor brings contact with a radio frequency connector. This reduces reliability of the antenna.

In conclusion, how to design an antenna to reduce installation complexity of an outdoor terminal and improve an antenna gain is a problem that needs to be resolved urgently.

### SUMMARY

This application provides an antenna apparatus and a communications apparatus, to reduce installation complexity of an outdoor terminal and improve antenna gains. The technical improvement is achieved by the solution provided in accordance with the claims.

The following examples are useful for understanding the application.

An example provides an antenna apparatus, including: N antenna ports and M directional polarization antennas, where M is K times 4, N is an integer multiple of 4, N and M are integers greater than 0, and K is an even number greater than 0;
the M directional polarization antennas are evenly distributed on four surfaces of a cube, each surface includes K directional polarization antennas, a polarization direction of K/2 directional polarization antennas on each surface is a first polarization direction, and a polarization direction of other K/2 directional polarization antennas on each surface is a second polarization direction; and
on two neighboring surfaces or two opposing surfaces of the four surfaces, K directional polarization antennas in a same polarization direction are combined into one channel, and are connected to one of the N antenna ports, and each of the N antenna ports is connected to the K directional polarization antennas.

According to the foregoing antenna apparatus, because used antennas are all directional polarization antennas, receiving performance is balanced in all directions, and multi-stream performance is improved. A communications apparatus using the antenna apparatus may receive a radio frequency signal by using directional polarization antennas in different directions, so that antenna adjustment is reduced and antenna installation complexity is reduced while antenna gains are ensured.

Optionally, the K directional polarization antennas included on each of the four surfaces are superimposed together.

Because the K directional polarization antennas included on each surface are superimposed together, a volume of the antenna apparatus can be reduced, antenna installation flexibility can be improved, and antenna installation complexity can be reduced.

Optionally, each of the K directional polarization antennas included on each of the four surfaces is independently distributed on the surface.

Because the K directional polarization antennas included on each surface are independent of each other, interference between antennas can be reduced, and antenna gains can be improved.

Optionally, the first polarization direction is -45°, and the second polarization direction is +45°; or the first polarization direction is a horizontal polarization direction, and the second polarization direction is a vertical polarization direction.

An example according to the invention provides a communications apparatus, including any one of the foregoing antenna apparatuses.

The communications apparatus further includes a processor, where
the processor is configured to obtain P signal measurement values that are separately obtained through measurement of each of the M directional polarization antennas within a preset time period, where P is an integer greater than 0; and
when an average value of the P signal measurement values corresponding to one directional polarization antenna in X directional polarization antennas is greater than a sum of an average value of P signal measurement values corresponding to one directional polarization antenna in a transmit antenna currently used by the communications apparatus and a first preset threshold, Y directional polarization antennas with a maximum average value of the P signal measurement values in the M directional polarization antennas are used as a transmit antenna, where
Y is less than or equal to M, and Y is greater than or equal to 1; the X directional polarization antennas are directional polarization antennas that are in the M directional polarization antennas and that are other than the transmit antenna currently used by the communications apparatus; and X is an integer greater than 0.

A transmit antenna used to transmit a radio frequency signal is adjusted in real time, to obtain optimal uplink performance.

Optionally, the signal measurement value is a reference signal received power RSRP, a received signal strength indicator RSSI, or a signal to interference plus noise ratio SINR. An example provides an antenna apparatus, including M antennas, where the M antennas include two omnidirectional antennas and 2xL directional polarization antennas, and L is an integer greater than 0;
the two omnidirectional antennas are separately distributed on two opposing surfaces of a cube, and each omnidirectional antenna is connected to one antenna port; and
the 2xL directional polarization antennas are evenly distributed on the other two surfaces of the cube, the 2xL directional polarization antennas include L directional polarization antennas in a first polarization direction and L directional polarization antennas in a second polarization direction, the L directional polarization antennas in the first polarization direction are connected to one antenna port after being combined, and the L directional polarization antennas in the second polarization direction are connected to another antenna port after being combined; and
four antenna ports, where one of the four antenna ports is connected to one omnidirectional antenna or is connected to L directional polarization antennas in a same polarization direction.

The foregoing antenna apparatus includes the directional polarization antennas and the omnidirectional antennas. The omnidirectional antennas can receive a radio frequency signal in all directions, and the directional antennas can obtain relatively good antenna gains in a direction, so that antenna adjustment is reduced, antenna installation complexity is reduced, and multi-stream performance can be obtained while antenna gains are ensured.

Optionally, M is 4, and L is 1.

Optionally, antenna reflection plates of the two directional polarization antennas are independent of each other; or the two directional polarization antennas share one antenna reflection plate, and the two directional polarization antennas are separately located on two surfaces of the antenna reflection plate.

Optionally, the 2xL directional polarization antennas all or partially overlay with or do not overlay with the two omnidirectional antennas in space of a vertical dimension. Optionally, the first polarization direction is -45°, and the second polarization direction is +45°; or the first polarization direction is a horizontal polarization direction, and the second polarization direction is a vertical polarization direction.

An example provides an antenna apparatus, including M antennas, where the M antennas include two omnidirectional antennas and 4xL directional polarization antennas, and L is an integer greater than 0; the 4xL directional polarization antennas include 2xL directional polarization antennas in a first polarization direction and 2xL directional polarization antennas in a second polarization direction; and
the two omnidirectional antennas are separately distributed on two opposing surfaces of a cube, and each omnidirectional antenna is connected to one antenna port; and
the 4xL directional polarization antennas are evenly distributed on four surfaces of the cube, and directional polarization antennas in a same polarization direction in the 4xL directional polarization antennas are connected to one antenna port after being combined; and
four antenna ports, where one of the four antenna ports is connected to one omnidirectional antenna or is connected to 2xL directional polarization antennas in a same polarization direction.

The foregoing antenna apparatus includes the directional polarization antennas and the omnidirectional antennas. The omnidirectional antennas can receive a radio frequency signal in all directions, and each surface of the cube includes a directional antenna. Therefore, relatively good antenna gains can be obtained in a direction by using the directional antenna on each surface, so that antenna adjustment is reduced, antenna installation complexity is reduced, and multi-stream performance can be obtained while antenna gains are ensured.

Optionally, M is 6, and L is 2.

Optionally, the 4xL directional polarization antennas all or partially overlay with or do not overlay with the two omnidirectional antennas in space of a vertical dimension. Optionally, the first polarization direction is -45°, and the second polarization direction is +45°; or the first polarization direction is a horizontal polarization direction, and the second polarization direction is a vertical polarization direction.

### BRIEF DESCRIPTION OF DRAWINGS

FIG. 1 is a schematic diagram of a scenario applicable to an embodiment of this application;
FIG. 2(a) to FIG. 2(c) are schematic structural diagrams of an antenna apparatus according to an embodiment of this application;
FIG. 3(a) to FIG. 3(c) are schematic structural diagrams of an antenna apparatus according to an embodiment of this application;
FIG. 4(a) to FIG. 4(e) are schematic structural diagrams of an antenna apparatus according to an embodiment of this application;
FIG. 5(a) to FIG. 5(e) are schematic structural diagrams of an antenna apparatus;
FIG. 6(a) to FIG. 6(c) are schematic structural diagrams of an antenna apparatus according to an embodiment of this application;
FIG. 7 is a schematic diagram of antenna switching according to an embodiment of this application; and
FIG. 8 is a schematic structural diagram of a communications apparatus according to an embodiment of this application.

### DESCRIPTION OF EMBODIMENTS

The following further describes in detail this application with reference to accompanying drawings.

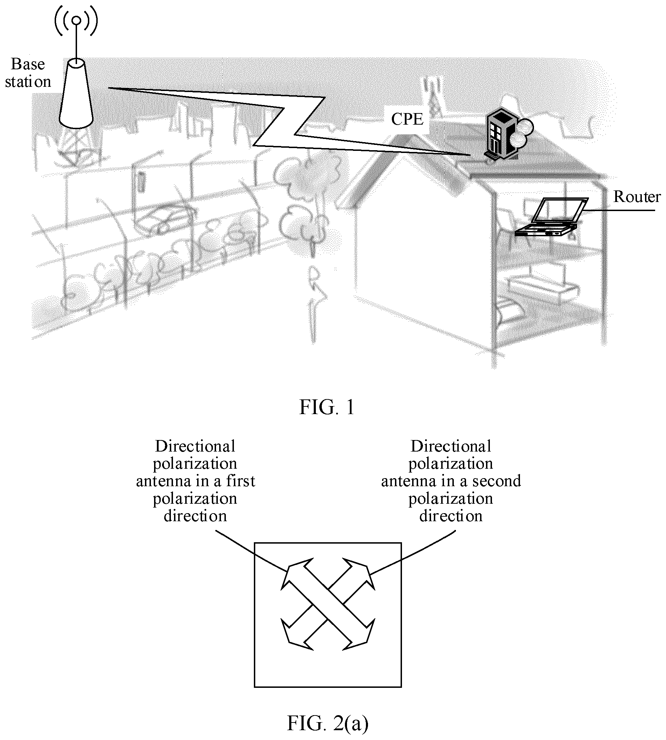

This application may be applied to various communications systems. Specifically, FIG. 1 is a schematic diagram of a scenario applicable to an embodiment of this application. In FIG. 1, an outdoor CPE that is installed on a roof or an external wall converts a received radio frequency signal sent by a base station into a digital signal and accesses a router in a house by using a network cable, or converts a digital signal received over a network cable into a radio frequency signal and sends the radio frequency signal to a base station. The CPE increases coverage of the base station and reduces site deployment costs.

This application provides a communications apparatus comprising an antenna apparatus, to reduce installation complexity of a CPE, improve antenna gains, and improve multiple-input multiple-output (Multiple-Input Multiple-Output, MIMO) performance. The following provides detailed descriptions.

In a first possible implementation, the communications apparatus provided in this embodiment of this application comprises an antenna apparatus, wherein the antenna apparatus includes N antenna ports and M directional polarization antennas, where M is K times 4, N is an integer multiple of 4, N and M are integers greater than 0, and K is an even number greater than 0.

The M directional polarization antennas are evenly distributed on four surfaces of a cube, each surface includes K directional polarization antennas, a polarization direction of K/2 directional polarization antennas on each surface is a first polarization direction, and a polarization direction of other K/2 directional polarization antennas on each surface is a second polarization direction.

On two neighboring surfaces or two opposing surfaces of the four surfaces, K antennas in a same polarization direction are combined into one channel, and are connected to one of the N antenna ports, and each of the N antenna ports is connected to the K directional polarization antennas.

It should be noted that a specific implementation of the directional polarization antenna is not limited in this embodiment of this application, and examples are not described one by one herein.

It should be noted that the first polarization direction is -45°, and the second polarization direction is +45°; or the first polarization direction is a horizontal polarization direction, and the second polarization direction is a vertical polarization direction.

In this embodiment of this application, how antennas on each surface are specifically arranged is not limited. In a possible implementation, the K directional polarization antennas included on each of the four surfaces are superimposed together.

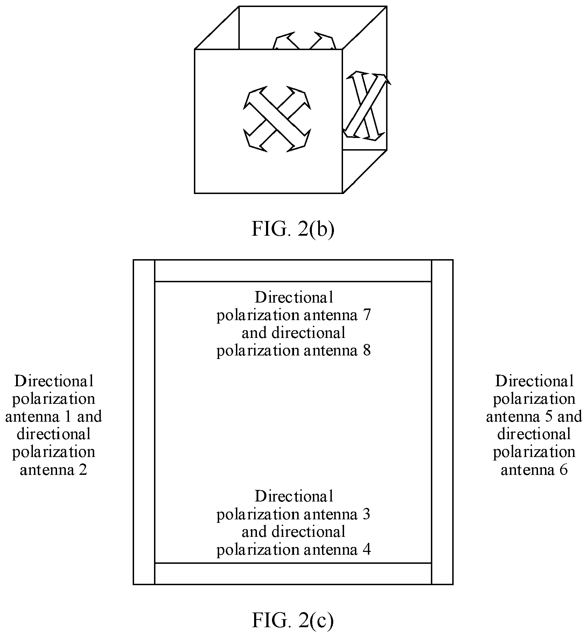

For example, N is equal to 4, M is equal to 8, and K is equal to 2. Two directional polarization antennas included on each surface are superimposed with each other. For details, refer to FIG. 2(a). FIG. 2(a) is a schematic diagram of a directional polarization antenna on any one of four surfaces of a cube. Directional polarization antennas on each surface are superimposed together, and each surface includes one directional polarization antenna in a first polarization direction and one directional polarization antenna in a second polarization direction. FIG. 2(b) is an overall schematic diagram of eight directional polarization antennas. In FIG. 2(b), an antenna port is not shown. Eight directional polarization antennas are evenly distributed on the four surfaces of the cube. On two neighboring surfaces or two opposing surfaces, two antennas in a same polarization direction are combined into one channel and are connected to one antenna port. It should be noted that each directional polarization antenna may be located on an antenna reflection plate, that is, the four surfaces of the cube are formed by four antenna reflection plates. FIG. 2(c) shows a top view of eight directional polarization antennas, and a directional polarization antenna 1 to a directional polarization antenna 8 are distributed on the four surfaces.

For other values of N and M, refer to the foregoing descriptions, and examples are not described one by one herein.

In another possible implementation, each of the K directional polarization antennas included on each of the four surfaces is independently distributed on the surface.

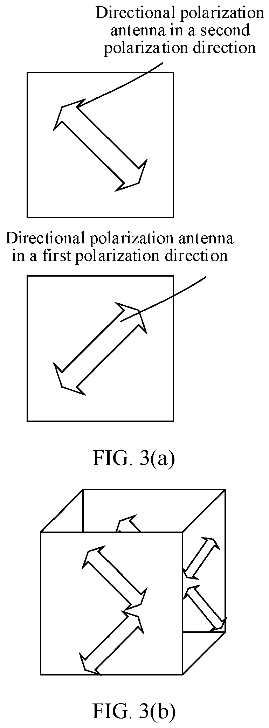

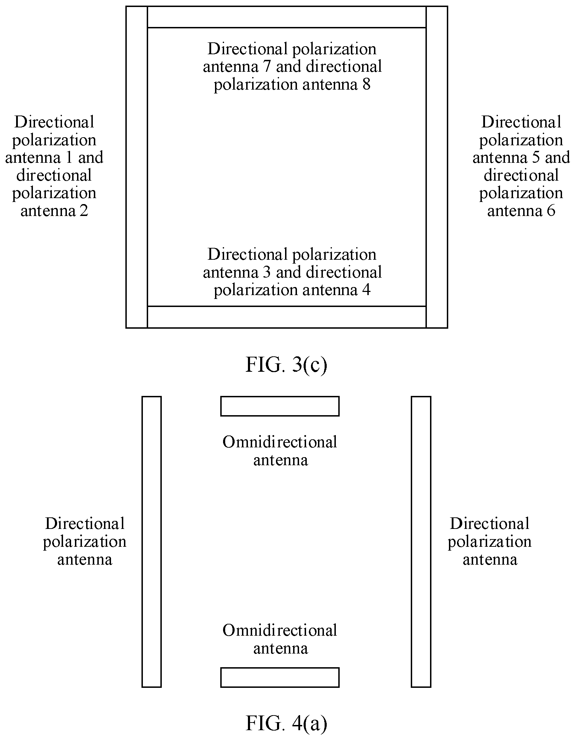

For example, N is equal to 4, M is equal to 8, and K is equal to 2. Each of two directional polarization antennas included on each surface is independently distributed on the surface. For details, refer to FIG. 3(a). FIG. 3(a) is a schematic diagram of a directional polarization antenna on one of four surfaces of a cube. Each of directional polarization antennas on each surface is independently distributed, and each surface includes one directional polarization antenna in a first polarization direction and one directional polarization antenna in a second polarization direction. FIG. 3(b) is an overall schematic diagram of eight directional polarization antennas. In FIG. 3(b), an antenna port is not shown. Eight directional polarization antennas are evenly distributed on the four surfaces of the cube. On two neighboring surfaces or two opposing surfaces, two antennas in a same polarization direction are combined into one channel and are connected to one antenna port. It should be noted that each directional polarization antenna may be located on an antenna reflection plate, that is, the four surfaces of the cube are formed by four antenna reflection plates. FIG. 3(c) shows a top view of eight directional polarization antennas, and a directional polarization antenna 1 to a directional polarization antenna 8 are distributed on the four surfaces.

For other values of N and M, refer to the foregoing descriptions, and examples are not described one by one herein.

The embodiments of this application provide a communications apparatus. The communications apparatus includes any one of the foregoing antenna apparatuses, and the communications apparatus may be an apparatus such as a CPE. This is not limited in this embodiment of this application.

When receiving a radio frequency signal, the communications apparatus receives the radio frequency signal by using M directional polarization antennas. When sending a radio frequency signal, the communications apparatus sends the radio frequency signal by using Y directional polarization antennas of the M directional polarization antennas, where Y is less than or equal to M.

Further, the communications apparatus further includes a processor. The processor is configured to perform the following actions:
obtaining P signal measurement values that are separately obtained through measurement of each of the M directional polarization antennas within a preset time period, where P is an integer greater than 0; and
when an average value of the P signal measurement values corresponding to one directional polarization antenna in X directional polarization antennas is greater than a sum of an average value of P signal measurement values corresponding to one directional polarization antenna in a transmit antenna currently used by the communications apparatus and a first preset threshold,
or when each of P signal measurement values corresponding to one directional polarization antenna in X directional polarization antennas is greater than a sum of any one of P signal measurement values corresponding to one directional polarization antenna in a transmit antenna currently used by the communications apparatus and a first preset threshold, Y directional polarization antennas with a maximum average value of the P signal measurement values in the M directional polarization antennas are used as a transmit antenna.

Y is less than or equal to M, and Y is greater than or equal to 1; the X directional polarization antennas are directional polarization antennas that are in the M directional polarization antennas and that are other than the transmit antenna currently used by the communications apparatus; and X is an integer greater than 0.

The communications apparatus may send the radio frequency signal by using the determined transmit antenna.

It should be noted that, in this embodiment of this application, the signal measurement value is a reference signal received power (Reference Signal Receiving Power, RSRP), a received signal strength indicator (Received Signal Strength Indicator, RSSI), or a signal to interference plus noise ratio (Signal to Interference plus Noise Ratio, SINR). How the communications apparatus specifically determines the signal measurement value is not limited in this embodiment of this application. For example, for any directional polarization antenna of the M directional polarization antennas, the communications apparatus may receive, by using the directional polarization antenna, P broadcast signals sent by a base station, and obtain P RSRPs, RSSIs, or SINRs through measurement of the P broadcast signals sent by the base station, to determine P signal measurement values corresponding to the directional polarization antenna.

It should be noted that, in this embodiment of this application, a value of the first preset threshold is a number greater than 0. The first preset threshold may be inversely proportional to a value of P, that is, a larger value of P indicates a smaller value of the first preset threshold.

For example, a quantity of transmit antennas is 1. The communications apparatus obtains 10 signal measurement values that are separately obtained through measurement of each of the M directional polarization antennas within a preset time period; and when an average value of 10 signal measurement values corresponding to one directional polarization antenna in X directional polarization antennas is greater than a sum of an average value of 10 signal measurement values corresponding to a transmit antenna currently used by the communications apparatus and a1, directional polarization antennas with a maximum average value of 10 signal measurement values in the M directional polarization antennas are used as a transmit antenna; or the communications apparatus obtains 20 signal measurement values that are separately obtained through measurement of each of the M directional polarization antennas within a preset time period; and when an average value of 20 signal measurement values corresponding to one directional polarization antenna in X directional polarization antennas is greater than a sum of an average value of 20 signal measurement values corresponding to a transmit antenna currently used by the communications apparatus and a2, directional polarization antennas with a maximum average value of 20 signal measurement values in the M directional polarization antennas are used as a transmit antenna, where a1 is greater than a2.

According to the foregoing antenna apparatus, because the M directional polarization antennas are distributed on four surfaces of a cube, throughputs in all directions can be basically balanced, and multi-stream performance is good. When the communications apparatus uses the foregoing antenna, the communications apparatus can obtain optimal uplink performance by using the foregoing transmit antenna selection method without a need to adjust a physical position of the antenna.

In addition to using all the directional polarization antennas, the antenna apparatus provided in this embodiment of this application may further include an omnidirectional antenna. Specifically, in a second possible implementation, an embodiment of this application provides a communications apparatus comprising an antenna apparatus, including: M antennas, where the M antennas include two omnidirectional antennas and 2xL directional polarization antennas, and L is an integer greater than 0; and four antenna ports.

The two omnidirectional antennas are separately distributed on two opposing surfaces of a cube, and each omnidirectional antenna is connected to one antenna port.

The 2xL directional polarization antennas are evenly distributed on the other two surfaces of the cube, the 2xL directional polarization antennas include L directional polarization antennas in a first polarization direction and L directional polarization antennas in a second polarization direction, the L directional polarization antennas in the first polarization direction are connected to one antenna port after being combined, and the L directional polarization antennas in the second polarization direction are connected to another antenna port after being combined. The first polarization direction is -45°, and the second polarization direction is +45°; or the first polarization direction is a horizontal polarization direction, and the second polarization direction is a vertical polarization direction.

One of the four antenna ports is connected to one omnidirectional antenna or is connected to L directional polarization antennas in a same polarization direction.

It should be noted that, in this embodiment of this application, a specific implementation of the omnidirectional antenna is not limited. For example, the omnidirectional antenna may include one element or a plurality of elements, and the plurality of elements may be vertically placed to form an array, or may be separately tilted at a specific angle to form an array. If being tilted, the elements of the two omnidirectional antennas are tilted in opposing directions. For example, the elements of the two omnidirectional antennas are tilted at an angle of +45 degree or -45 degree. Certainly, the omnidirectional antenna may alternatively include another form, and examples are not described one by one herein.

It should be noted that a specific implementation of the directional polarization antenna is not limited in this embodiment of this application, and examples are not described one by one herein.

In an implementation not covered by the claims, directional polarization antennas distributed on two opposing surfaces of the cube may share one antenna reflection plate, that is, the 2xL directional polarization antennas are distributed on two surfaces of one antenna reflection plate. Alternatively, directional polarization antennas distributed on two opposing surfaces of the cube may be distributed on different antenna reflection plates.

The 2xL directional polarization antennas all or partially overlay with or do not overlay with the two omnidirectional antennas in space of a vertical dimension.

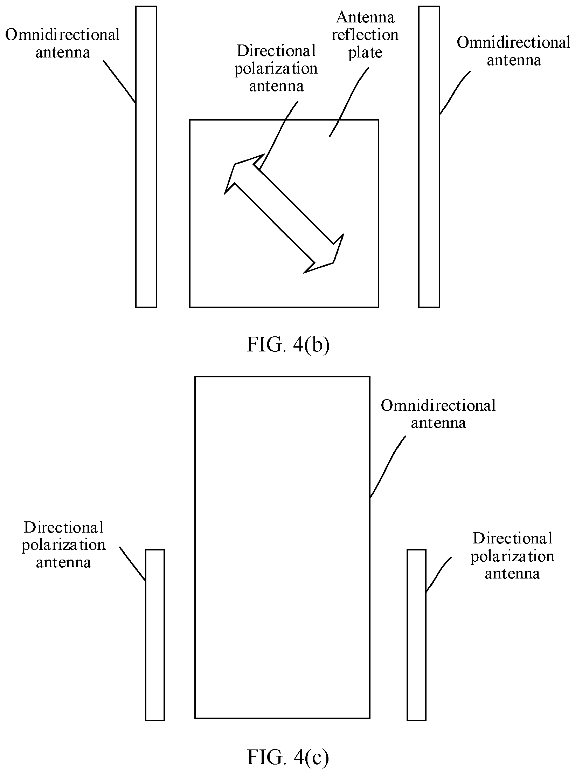

For example, when M is 4, and L is 1, the antenna apparatus includes two omnidirectional antennas and two directional polarization antennas. For details, refer to FIG. 4(a) to FIG. 4(e). FIG. 4(a) is a top view of an antenna apparatus. In FIG. 4(a), two omnidirectional antennas are distributed on two opposing surfaces of a cube, and two directional polarization antennas are distributed on the other two opposing surfaces of the cube. Two directional polarization antennas are distributed on different antenna reflection plates. FIG. 4(b) is a front view of the antenna apparatus. In FIG. 4(b), a directional polarization antenna all overlays with an omnidirectional antenna in space of a vertical dimension. Correspondingly, FIG. 4(c) is a side view of the antenna apparatus.

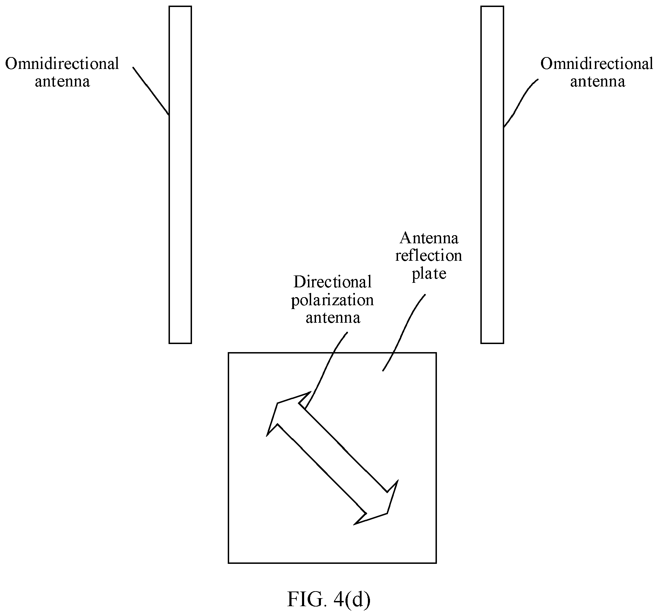

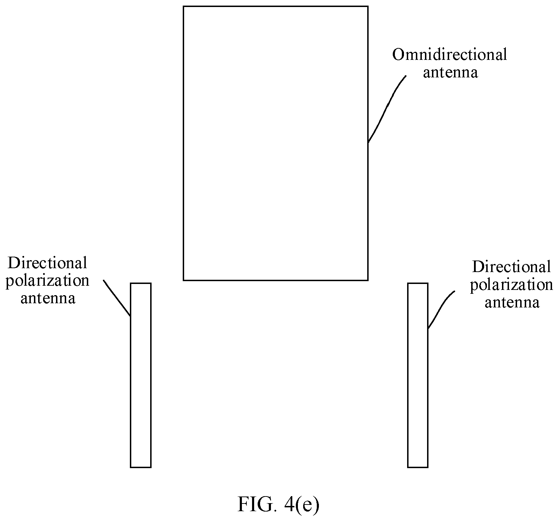

Certainly, in a vertical dimension, the directional polarization antenna may alternatively be located in another position. For example, FIG. 4(d) is a front view of another antenna apparatus. In FIG. 4(d), the directional polarization antenna and the omnidirectional antenna do not overlay in space of a vertical dimension. Correspondingly, FIG. 4(e) is a side view of the antenna apparatus.

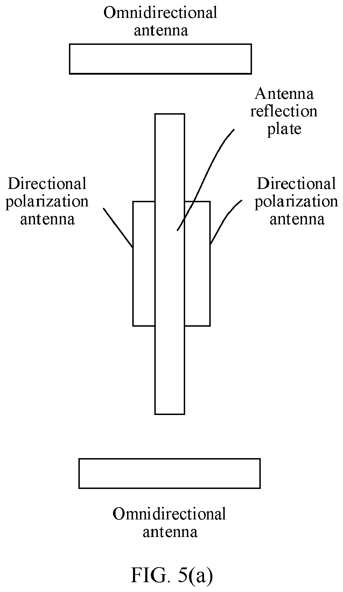

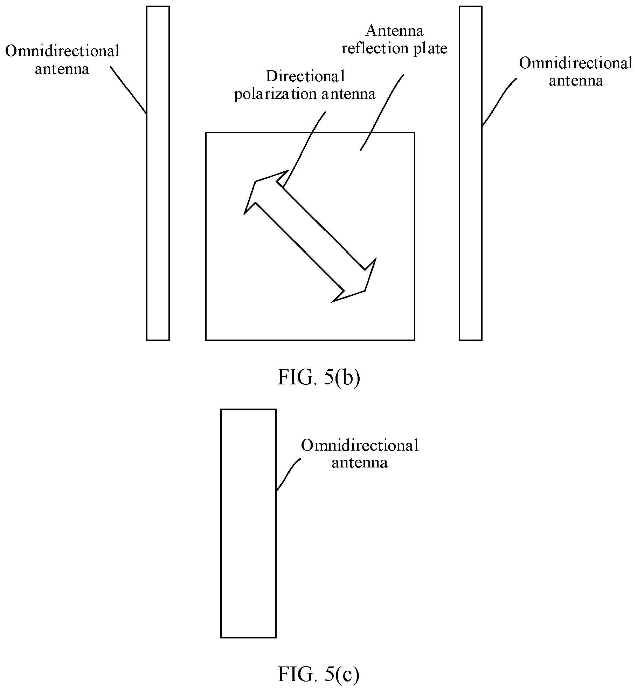

For another example, when M is 4, and L is 1, the antenna apparatus includes two omnidirectional antennas and two directional polarization antennas, and the two directional polarization antennas distributed on two opposing surfaces of the cube share one antenna reflection plate. For details, refer to FIG. 5(a) to FIG. 5(e). FIG. 5(a) is a top view of an antenna apparatus. In FIG. 5(a), two omnidirectional antennas are distributed on two opposing surfaces of a cube, and two directional polarization antennas are distributed on the other two opposing surfaces of the cube, and the two directional polarization antennas share one antenna reflection plate, and are distributed on two surfaces of the antenna reflection plate. FIG. 5(b) is a front view of the antenna apparatus. In FIG. 5(b), a directional polarization antenna all overlays with an omnidirectional antenna in space of a vertical dimension. Correspondingly, FIG. 5(c) is a side view of the antenna apparatus.

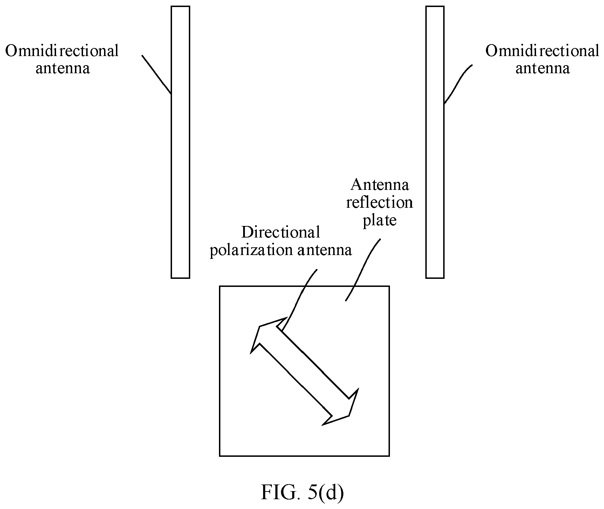

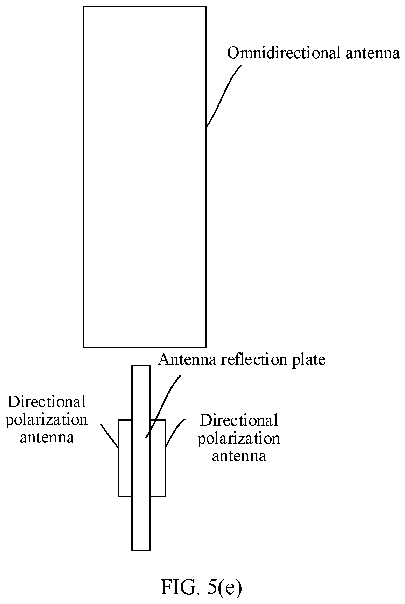

Certainly, in a vertical dimension, the directional polarization antenna may alternatively be located in another position. For example, FIG. 5(d) is a front view of another antenna apparatus. In FIG. 5(d), the directional polarization antenna and the omnidirectional antenna do not overlay in space of a vertical dimension. Correspondingly, FIG. 5(e) is a side view of the antenna apparatus.

For other values of L and M, refer to the foregoing descriptions, and examples are not described one by one herein.

The embodiments of this application provide a communications apparatus. The communications apparatus includes any one of the foregoing antenna apparatuses, and the communications apparatus may be an apparatus such as a CPE. This is not limited in this embodiment of this application.

When receiving a radio frequency signal, the communications apparatus receives the radio frequency signal by using M antennas. When the communications apparatus sends a radio frequency signal, if the communications apparatus supports only single-antenna transmission, a directional polarization antenna or an omnidirectional antenna is selected as a transmit antenna; or if the communications apparatus supports multi-antenna transmission, two or more antennas are selected from the M antennas as a transmit antenna.

Further, the communications apparatus further includes a processor. The processor is configured to perform the following actions:
obtaining P signal measurement values that are separately obtained through measurement of each directional polarization antenna or omnidirectional antenna of the M antennas within a preset time period, where P is an integer greater than 0; and
when an average value of the P signal measurement values corresponding to one antenna in X antennas is greater than a sum of an average value of P signal measurement values corresponding to one antenna in a transmit antenna currently used by the communications apparatus and a first preset threshold, Y antennas with a maximum average value of the P signal measurement values in the M antennas are used as a transmit antenna.

Y is less than or equal to M, and Y is greater than or equal to 1; the X antennas are antennas that are in the M antennas and that are other than the transmit antenna currently used by the communications apparatus; and X is an integer greater than 0.

The communications apparatus may send the radio frequency signal by using the determined transmit antenna.

In a third possible implementation, an embodiment of this application further provides a communications apparatus comprising an antenna apparatus, including: M antennas, where the M antennas include two omnidirectional antennas and 4xL directional polarization antennas, and L is an integer greater than 0; and the 4xL directional polarization antennas include 2xL directional polarization antennas in a first polarization direction is and 2xL directional polarization antennas in a second polarization direction; and four antenna ports, where one of the four antenna ports is connected to one omnidirectional antenna or is connected to 2xL directional polarization antennas in a same polarization direction.

The two omnidirectional antennas are separately distributed on two opposing surfaces of a cube, and each omnidirectional antenna is connected to one antenna port; and the 4xL directional polarization antennas are evenly distributed on four surfaces of the cube, and directional polarization antennas in a same polarization direction in the 4xL directional polarization antennas are connected to one antenna port after being combined.

It should be noted that, in this embodiment of this application, a specific implementation of the omnidirectional antenna is not limited. For example, the omnidirectional antenna may include one element or a plurality of elements, and the plurality of elements may be vertically placed to form an array, or may be separately tilted at a specific angle to form an array. If being tilted, the elements of the two omnidirectional antennas are tilted in opposing directions. For example, the elements of the two omnidirectional antennas are tilted at an angle of +45 degree or -45 degree.

Certainly, the omnidirectional antenna may also include another form, and examples are not described one by one herein.

It should be noted that a specific implementation of the directional polarization antenna is not limited in this embodiment of this application, and examples are not described one by one herein.

In this embodiment of this application, the 4xL directional polarization antennas all or partially overlay with or do not overlay with the two omnidirectional antennas in space of a vertical dimension.

In this embodiment of this application, the first polarization direction is -45°, and the second polarization direction is +45°; or the first polarization direction is a horizontal polarization direction, and the second polarization direction is a vertical polarization direction.

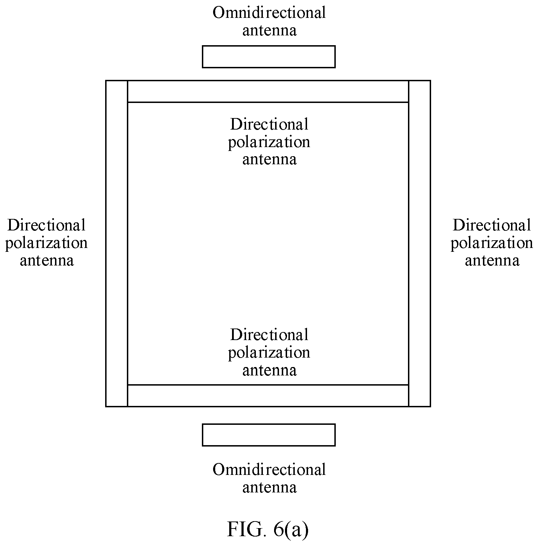

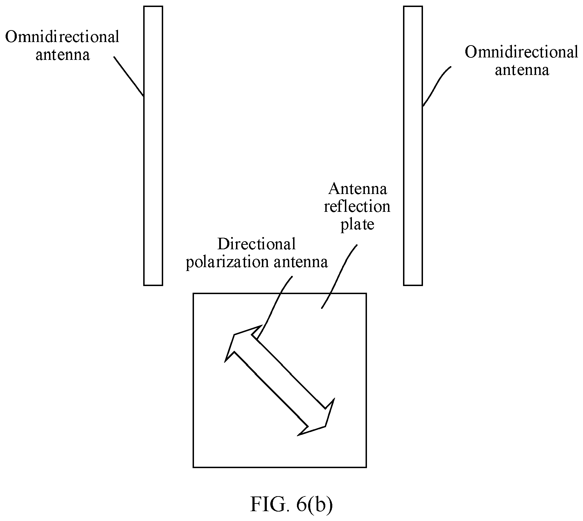

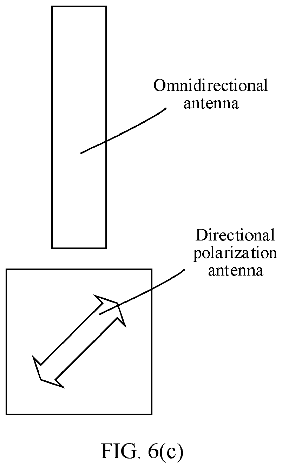

For example, when M is 6, and L is 2, the antenna apparatus includes two omnidirectional antennas and four directional polarization antennas. For details, refer to FIG. 6(a) to FIG. 6(c). FIG. 6(a) is a top view of an antenna apparatus. In FIG. 6(a), two omnidirectional antennas are distributed on two opposing surfaces of a cube, and four directional polarization antennas are evenly distributed on four surfaces of the cube, and directional polarization antennas in a same polarization direction in the four directional polarization antennas are connected to one antenna port (not shown in the figure) after being combined. FIG. 6(b) is a front view of the antenna apparatus. In FIG. 6(b), a directional polarization antenna does not overlay with an omnidirectional antenna in space of a vertical dimension. Correspondingly, FIG. 6(c) is a side view of the antenna apparatus.

Certainly, in a vertical dimension, the directional polarization antenna may alternatively be located in another position. For example, the directional polarization antenna all or partially overlays with the omnidirectional antenna in space of a vertical dimension, and details are not described herein again.

For other values of L and M, refer to the foregoing descriptions, and examples are not described one by one herein.

The embodiments of this application provide a communications apparatus. The communications apparatus includes any one of the foregoing antenna apparatuses, and the communications apparatus may be an apparatus such as a CPE. This is not limited in this embodiment of this application.

When receiving a radio frequency signal, the communications apparatus receives the radio frequency signal by using M antennas. When the communications apparatus sends a radio frequency signal, if the communications apparatus supports only single-antenna transmission, a directional polarization antenna or an omnidirectional antenna is selected as a transmit antenna; or if the communications apparatus supports multi-antenna transmission, two or more antennas are selected from the M antennas as a transmit antenna.

Further, the communications apparatus further includes a processor. The processor is configured to perform the following actions:
obtaining P signal measurement values that are separately obtained through measurement of each directional polarization antenna or omnidirectional antenna of the M antennas within a preset time period, where P is an integer greater than 0; and
when an average value of the P signal measurement values corresponding to one antenna in X antennas is greater than a sum of an average value of P signal measurement values corresponding to one antenna in a transmit antenna currently used by the communications apparatus and a first preset threshold, Y antennas with a maximum average value of the P signal measurement values in the M antennas are used as a transmit antenna.

Y is less than or equal to M, and Y is greater than or equal to 1; the X antennas are antennas in the M antennas other than the transmit antenna currently used by the communications apparatus; and X is an integer greater than 0.

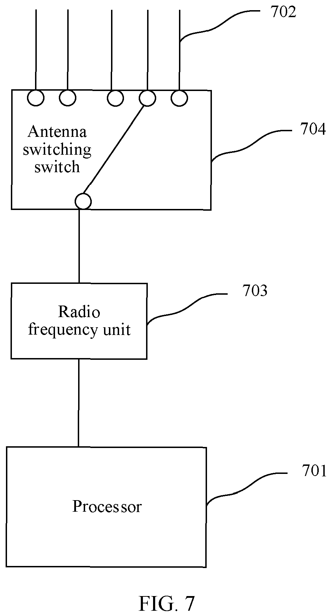

It should be noted that, in this embodiment of this application, a processor in any one of the foregoing communications apparatuses may be a baseband processor, hereinafter referred to as a processor. After determining the transmit antenna, the processor sends a switching instruction to an antenna switching switch, and the switching instruction instructs the antenna switching switch to select and connect a link of the determined transmit antenna. After the antenna switching switch selects and connects, based on the switching instruction, the link of the transmit antenna determined by the processor, the processor may transmit an uplink signal to a radio frequency unit, and then the radio frequency unit transmits the uplink signal by using the selected and connected transmit antenna. For details, refer to FIG. 7. In FIG. 7, there are units such as a radio frequency unit 703 and an antenna switching switch 704 between a processor 701 and an antenna apparatus 702. A specific structure of the foregoing units is not limited in this embodiment of this application, and details are not described herein again. The processor 701 instructs, by using a switching instruction, the antenna switching switch 704 to select at least one antenna from the antenna apparatus 702 as a transmit antenna, so that the radio frequency unit 703 may send an uplink signal by using the selected and connected transmit antenna.

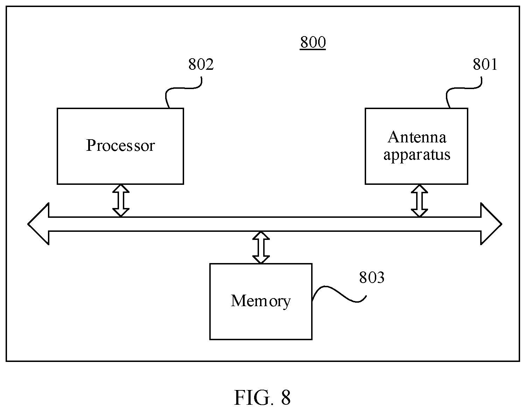

FIG. 8 is a schematic structural diagram of a communications apparatus according to an embodiment of this application.

The communications apparatus 800 includes an antenna apparatus 801, the antenna apparatus 801 may be any one of the foregoing antenna apparatuses, and the communications apparatus 800 may be an apparatus such as a CPE. This is not limited in this embodiment of this application.

The communications apparatus 800 further includes a processor 802 and a memory 803. The memory 803 may be configured to store a program instruction. The processor 802 invokes the program instruction stored in the memory 803, to perform one or more steps of the antenna apparatus or an optional implementation in the foregoing method embodiments, so that the communications apparatus 800 implements a function in the foregoing methods.

The processor 802 is configured to perform the following actions:
obtaining P signal measurement values that are separately obtained through measurement of each of the M directional polarization antennas within a preset time period, where P is an integer greater than 0; and
when an average value of the P signal measurement values corresponding to one directional polarization antenna in X directional polarization antennas is greater than a sum of an average value of P signal measurement values corresponding to one directional polarization antenna in a transmit antenna currently used by the communications apparatus and a first preset threshold, or when each of P signal measurement values corresponding to one directional polarization antenna in X directional polarization antennas is greater than a sum of any one of P signal measurement values corresponding to one directional polarization antenna in a transmit antenna currently used by the communications apparatus and a first preset threshold, Y directional polarization antennas with a maximum average value of the P signal measurement values in the M directional polarization antennas are used as a transmit antenna.

Y is less than or equal to M, and Y is greater than or equal to 1; the X directional polarization antennas are directional polarization antennas that are in the M directional polarization antennas and that are other than the transmit antenna currently used by the communications apparatus; and X is an integer greater than 0.

Clearly, a person skilled in the art can make various modifications and variations to this application without departing from the scope of this application. This application is intended to cover these modifications and variations of this application provided that they fall within the scope of protection defined by the following claims.

## Claims

1. A communications apparatus, comprising an antenna apparatus, the antenna apparatus comprising:
N antenna ports and M directional polarization antennas, wherein M is K times 4, N is an integer multiple of 4, N and M are integers greater than 0, and K is an even number greater than 0; and
the M directional polarization antennas are evenly distributed on four surfaces of a cube, each surface comprises K directional polarization antennas, a polarization direction of K/2 directional polarization antennas on each surface is a first polarization direction, and a polarization direction of other K/2 directional polarization antennas on each surface is a second polarization direction;
on two neighboring surfaces or two opposing surfaces of the four surfaces, K directional polarization antennas in a same polarization direction are combined into one channel, and are connected to one of the N antenna ports, and each of the N antenna ports is connected to the K directional polarization antennas,
wherein the communications apparatus further comprises a processor (701),
**characterized in that**
the processor (701) is configured to obtain, for each of the M directional polarization antennas, P signal measurement values that are separately obtained through measurement of the each of the M directional polarization antennas within a preset time period, wherein P is an integer greater than 0; and
when an average value of the P signal measurement values corresponding to one directional polarization antenna in X directional polarization antennas is greater than a sum of an average value of P signal measurement values corresponding to one directional polarization antenna in a transmit antenna currently used by the communications apparatus and a first preset threshold, Y directional polarization antennas with a maximum average value of the P signal measurement values in the M directional polarization antennas are used as a transmit antenna, wherein
Y is less than or equal to M, and Y is greater than or equal to 1; the X directional polarization antennas are directional polarization antennas that are in the M directional polarization antennas and that are other than the transmit antenna currently used by the communications apparatus; and X is an integer greater than 0.

2. The communications apparatus according to claim 1, wherein the K directional polarization antennas comprised on each of the four surfaces are superimposed together.

3. The communications apparatus according to claim 1, wherein each of the K directional polarization antennas comprised on each of the four surfaces is independently distributed on the surface.

4. The communications apparatus according to any one of claims 1 to 3, wherein the first polarization direction is -45°, and the second polarization direction is +45°; or the first polarization direction is a horizontal polarization direction, and the second polarization direction is a vertical polarization direction.

5. The communications apparatus according to any one of claims 1 to 4, wherein the signal measurement value is a reference signal received power, RSRP, a received signal strength indicator, RSSI, or a signal to interference plus noise ratio, SINR.

6. A communications apparatus, comprising an antenna apparatus, the antenna apparatus comprising M antennas, wherein the M antennas comprise two omnidirectional antennas and 2xL directional polarization antennas, and L is an integer greater than 0;
the two omnidirectional antennas are separately distributed on two opposing side surfaces of a cube, and each omnidirectional antenna is connected to one antenna port; and
the 2xL directional polarization antennas are evenly distributed on the other two side surfaces of the cube, the 2xL directional polarization antennas comprise L directional polarization antennas in a first polarization direction and L directional polarization antennas in a second polarization direction, the L directional polarization antennas in the first polarization direction are connected to one antenna port after being combined, and the L directional polarization antennas in the second polarization direction are connected to another antenna port after being combined; and
four antenna ports, wherein one of the four antenna ports is connected to one omnidirectional antenna or is connected to L directional polarization antennas in a same polarization direction,
wherein the communications apparatus further comprises a processor (701), wherein
the processor (701) is configured to obtain P signal measurement values that are separately obtained through measurement of each directional polarization antenna or omnidirectional antenna of the M antennas within a preset time period, where P is an integer greater than 0; and
when an average value of the P signal measurement values corresponding to one antenna in X antennas is greater than a sum of an average value of P signal measurement values corresponding to one antenna in a transmit antenna currently used by the communications apparatus and a first preset threshold, Y antennas with a maximum average value of the P signal measurement values in the M antennas are used as a transmit antenna,
wherein Y is less than or equal to M, and Y is greater than or equal to 1; the X antennas are antennas that are in the M antennas and that are other than the transmit antenna currently used by the communications apparatus; and X is an integer greater than 0.

7. The communications apparatus according to claim 6, wherein the antenna apparatus further comprises antenna reflection plates configured for the directional polarization antennas to be located thereon, wherein the antenna reflection plates for the 2xL directional polarization antennas are independent of each other (FIG. 4(a) to FIG. 4(e)).

8. The communications apparatus according to claim 6 or claim 7, wherein the 2xL directional polarization antennas all or partially overlay with or do not overlay with the two omnidirectional antennas in space of a vertical dimension.

9. The communications apparatus according to any one of claims 6 to 8, wherein the first polarization direction is -45°, and the second polarization direction is +45°; or the first polarization direction is a horizontal polarization direction, and the second polarization direction is a vertical polarization direction.

10. The communications apparatus according to claim 6, wherein the M antennas comprise two omnidirectional antennas and 4xL directional polarization antennas, and L is an integer greater than 0; the 4xL directional polarization antennas comprise 2xL directional polarization antennas in a first polarization direction and 2xL directional polarization antennas in a second polarization direction; and
the two omnidirectional antennas are separately distributed on two opposing surfaces of a cube, and each omnidirectional antenna is connected to one antenna port; and
the 4xL directional polarization antennas are evenly distributed on four surfaces of the cube, and directional polarization antennas in a same polarization direction in the 4xL directional polarization antennas are connected to one antenna port after being combined; and
four antenna ports, wherein one of the four antenna ports is connected to one omnidirectional antenna or is connected to 2xL directional polarization antennas in a same polarization direction.

11. The communications apparatus according to claim 10, wherein M is 6, and L is 2 (FIG. 6(a) to FIG. 6(c)).

12. The communications apparatus according to claim 10 or 11, wherein the 4xL directional polarization antennas all or partially overlay with or do not overlay with the two omnidirectional antennas in space of a vertical dimension.

13. The communications apparatus according to any one of claims 6 to 12, wherein the signal measurement value is a reference signal received power, RSRP, a received signal strength indicator, RSSI, or a signal to interference plus noise ratio, SINR.

## Patentansprüche

1. Kommunikationsvorrichtung, umfassend eine Antennenvorrichtung, wobei die Antennenvorrichtung Folgendes umfasst:
N Antennenanschlüsse und M Richtungspolarisationsantennen, wobei M gleich K mal 4 ist, N ein ganzzahliges Vielfaches von 4 ist, N und M Ganzzahlen größer als 0 sind und K eine gerade Zahl größer als 0 ist; und
die M Richtungspolarisationsantennen gleichmäßig auf vier Oberflächen eines Würfels verteilt sind, jede Oberfläche K Richtungspolarisationsantennen umfasst, eine Polarisationsrichtung von K/2 Richtungspolarisationsantennen auf jeder Oberfläche eine erste Polarisationsrichtung ist und eine Polarisationsrichtung anderer K/2 Richtungspolarisationsantennen auf jeder Oberfläche eine zweite Polarisationsrichtung ist;
auf zwei benachbarten Oberflächen oder zwei gegenüberliegenden Oberflächen der vier Oberflächen K Richtungspolarisationsantennen in einer gleichen Polarisationsrichtung zu einem Kanal kombiniert sind und mit einem der N Antennenanschlüsse verbunden sind und jeder der N Antennenanschlüsse mit den K Richtungspolarisationsantennen verbunden ist,
wobei die Kommunikationsvorrichtung ferner einen Prozessor (701) umfasst, **dadurch gekennzeichnet, dass**
der Prozessor (701) dazu konfiguriert ist, für jede der M Richtungspolarisationsantennen P Signalmesswerte zu erlangen, die separat durch Messung jeder der M Richtungspolarisationsantennen innerhalb eines voreingestellten Zeitraums erlangt werden, wobei P eine Ganzzahl größer als 0 ist; und
wenn ein Durchschnittswert der P Signalmesswerte, die einer Richtungspolarisationsantenne in X Richtungspolarisationsantennen entsprechen, größer als eine Summe eines Durchschnittswerts von P Signalmesswerten, die einer Richtungspolarisationsantenne in einer Sendeantenne entsprechen, die aktuell durch die Kommunikationsvorrichtung verwendet wird, und eines ersten voreingestellten Schwellenwerts ist, Y Richtungspolarisationsantennen mit einem maximalen Durchschnittswert der P Signalmesswerte in den M Richtungspolarisationsantennen als eine Sendeantenne verwendet werden, wobei
Y kleiner oder gleich M ist und Y größer oder gleich 1 ist; die X Richtungspolarisationsantennen Richtungspolarisationsantennen sind, die sich in den M Richtungspolarisationsantennen befinden und die andere sind als die Sendeantenne, die aktuell durch die Kommunikationsvorrichtung verwendet wird; und X eine Ganzzahl größer als 0 ist.

2. Kommunikationsvorrichtung nach Anspruch 1, wobei die K Richtungspolarisationsantennen, die in jeder der vier Oberflächen umfasst sind, übereinander angeordnet sind.

3. Kommunikationsvorrichtung nach Anspruch 1, wobei jede der K Richtungspolarisationsantennen, die in jeder der vier Oberflächen umfasst sind, unabhängig auf der Oberfläche verteilt ist.

4. Kommunikationsvorrichtung nach einem der Ansprüche 1 bis 3, wobei die erste Polarisationsrichtung -45° beträgt und die zweite Polarisationsrichtung +45° beträgt; oder die erste Polarisationsrichtung eine horizontale Polarisationsrichtung ist und die zweite Polarisationsrichtung eine vertikale Polarisationsrichtung ist.

5. Kommunikationsvorrichtung nach einem der Ansprüche 1 bis 4, wobei der Signalmesswert eine Empfangsfeldstärke des Referenzsignals, RSRP, ein Empfangsfeldstärkeindikator, RSSI, oder ein Signal-Interferenz-Rausch-Verhältnis, SINR, ist.

6. Kommunikationsvorrichtung, umfassend eine Antennenvorrichtung, wobei die Antennenvorrichtung M Antennen umfasst, wobei die M Antennen zwei Rundstrahlantennen und 2xL Richtungspolarisationsantennen umfassen und L eine Ganzzahl größer als 0 ist;
die zwei Rundstrahlantennen separat auf zwei gegenüberliegenden Seitenoberflächen eines Würfels verteilt sind und jede Rundstrahlantenne mit einem Antennenanschluss verbunden ist; und die 2xL Richtungspolarisationsantennen gleichmäßig auf den anderen zwei Seitenoberflächen des Würfels verteilt sind, die 2xL Richtungspolarisationsantennen L Richtungspolarisationsantennen in einer ersten Polarisationsrichtung und L Richtungspolarisationsantennen in einer zweiten Polarisationsrichtung umfassen, die L Richtungspolarisationsantennen in der ersten Polarisationsrichtung, nachdem sie kombiniert sind, mit einem Antennenanschluss verbunden sind und die L Richtungspolarisationsantennen in der zweiten Polarisationsrichtung, nachdem sie kombiniert sind, mit einem anderen Antennenanschluss verbunden sind; und
vier Antennenanschlüsse, wobei einer der vier Antennenanschlüsse mit einer Rundstrahlantenne oder mit L Richtungspolarisationsantennen in einer gleichen Polarisationsrichtung verbunden ist,
wobei die Kommunikationsvorrichtung ferner einen Prozessor (701) umfasst, wobei
der Prozessor (701) dazu konfiguriert ist, P Signalmesswerte zu erlangen, die separat durch Messung jeder Richtungspolarisationsantenne oder Rundstrahlantenne der M Antennen innerhalb eines voreingestellten Zeitraums erlangt werden, wobei P eine Ganzzahl größer als 0 ist; und
wenn ein Durchschnittswert der P Signalmesswerte, die einer Antenne in X Antennen entsprechen, größer als eine Summe eines Durchschnittswerts von P Signalmesswerten, die einer Antenne in einer Sendeantenne entsprechen, die aktuell durch die Kommunikationsvorrichtung verwendet wird, und eines ersten voreingestellten Schwellenwerts ist, Y Antennen mit einem maximalen Durchschnittswert der P Signalmesswerte in den M Antennen als eine Sendeantenne verwendet werden,
wobei Y kleiner oder gleich M ist und Y größer oder gleich 1 ist; die X Antennen Antennen sind, die sich in den M Antennen befinden und die andere sind als die Sendeantenne, die aktuell durch die Kommunikationsvorrichtung verwendet wird; und X eine Ganzzahl größer als 0 ist.

7. Kommunikationsvorrichtung nach Anspruch 6, wobei die Antennenvorrichtung ferner Antennenreflexionsplatten umfasst, die derart konfiguriert sind, dass die Richtungspolarisationsantennen darauf angeordnet werden können, wobei die Antennenreflexionsplatten für die 2xL Richtungspolarisationsantennen voneinander unabhängig sind (FIG. 4(a) bis FIG. 4(e)).

8. Kommunikationsvorrichtung nach Anspruch 6 oder Anspruch 7, wobei die 2xL Richtungspolarisationsantennen in einem Raum mit vertikaler Dimension alle oder teilweise mit den zwei Rundstrahlantennen überlappen oder nicht überlappen.

9. Kommunikationsvorrichtung nach einem der Ansprüche 6 bis 8, wobei die erste Polarisationsrichtung -45° beträgt und die zweite Polarisationsrichtung +45° beträgt; oder die erste Polarisationsrichtung eine horizontale Polarisationsrichtung ist und die zweite Polarisationsrichtung eine vertikale Polarisationsrichtung ist.

10. Kommunikationsvorrichtung nach Anspruch 6, wobei die M Antennen zwei Rundstrahlantennen und 4xL Richtungspolarisationsantennen umfassen und L eine Ganzzahl größer als 0 ist; die 4xL Richtungspolarisationsantennen 2xL Richtungspolarisationsantennen in einer ersten Polarisationsrichtung und 2xL Richtungspolarisationsantennen in einer zweiten Polarisationsrichtung umfassen; und
die zwei Rundstrahlantennen separat auf zwei gegenüberliegenden Oberflächen eines Würfels verteilt sind und jede Rundstrahlantenne mit einem Antennenanschluss verbunden ist; und die 4xL Richtungspolarisationsantennen gleichmäßig auf vier Oberflächen des Würfels verteilt sind und Richtungspolarisationsantennen in einer gleichen Polarisationsrichtung in den 4xL Richtungspolarisationsantennen, nachdem sie kombiniert sind, mit einem Antennenanschluss verbunden sind; und
vier Antennenanschlüsse, wobei einer der vier Antennenanschlüsse mit einer Rundstrahlantenne verbunden ist oder mit 2xL Richtungspolarisationsantennen in einer gleichen Polarisationsrichtung verbunden ist.

11. Kommunikationsvorrichtung nach Anspruch 10, wobei M 6 ist und L 2 ist (FIG. 6(a) bis FIG. 6(c)).

12. Kommunikationsvorrichtung nach Anspruch 10 oder 11, wobei die 4xL Richtungspolarisationsantennen in einem Raum mit vertikaler Dimension alle oder teilweise mit den zwei Rundstrahlantennen überlappen oder nicht überlappen.

13. Kommunikationsvorrichtung nach einem der Ansprüche 6 bis 12, wobei der Signalmesswert eine Empfangsfeldstärke des Referenzsignals, RSRP, ein Empfangsfeldstärkeindikator, RSSI, oder ein Signal-Interferenz-Rausch-Verhältnis, SINR, ist.

## Revendications

1. Appareil de communication, comprenant un appareil d'antenne, l'appareil d'antenne comprenant :
N ports d'antenne et M antennes à polarisation directionnelle, dans lequel M est K fois 4, N est un multiple entier de 4, N et M sont des nombres entiers supérieurs à 0, et K est un nombre pair supérieur à 0 ; et
les M antennes à polarisation directionnelle sont réparties uniformément sur quatre surfaces d'un cube, chaque surface comprend K antennes à polarisation directionnelle, une direction de polarisation des antennes à polarisation directionnelle K/2 sur chaque surface est une première direction de polarisation, et une direction de polarisation d'une autre direction K/2 antennes à polarisation directionnelle sur chaque surface constituent une seconde direction de polarisation ;
sur deux surfaces voisines ou sur deux surfaces opposées des quatre surfaces, K antennes à polarisation directionnelle dans une même direction de polarisation sont combinées en un seul canal et sont connectées à l'un des N ports d'antenne, et chacun des N ports d'antenne est connecté aux K antennes à polarisation directionnelle,
dans lequel l'appareil de communication comprend également un processeur (701), **caractérisé en ce que**
le processeur (701) est configuré pour obtenir, pour chacune des M antennes à polarisation directionnelle, P valeurs de mesure de signal qui sont obtenues séparément par la mesure de chacune des M antennes à polarisation directionnelle au cours d'une période de temps prédéfinie, dans lequel P est un nombre entier supérieur à 0 ; et
lorsqu'une valeur moyenne des P valeurs de mesure de signal correspondant à une antenne à polarisation directionnelle dans X antennes à polarisation directionnelle est supérieure à une somme d'une valeur moyenne de P valeurs de mesure de signal correspondant à une antenne à polarisation directionnelle dans une antenne d'émission actuellement utilisée par les appareils de communication et un premier seuil prédéfini, Y antennes à polarisation directionnelle avec une valeur moyenne maximale des P valeurs de mesure de signal dans les M antennes à polarisation directionnelle sont utilisées comme antenne d'émission, dans lequel
Y est inférieur ou égal à M, et Y est supérieur ou égal à 1 ; les X antennes à polarisation directionnelle sont des antennes à polarisation directionnelle qui font partie des M antennes à polarisation directionnelle et qui sont autres que l'antenne d'émission actuellement utilisée par l'appareil de communication ; et X est un nombre entier supérieur à 0.

2. Appareil de communication selon la revendication 1, dans lequel les K antennes à polarisation directionnelle comprises sur chacune des quatre surfaces sont superposées.

3. Appareil de communication selon la revendication 1, dans lequel chacune des K antennes à polarisation directionnelle comprises sur chacune des quatre surfaces est répartie indépendamment sur la surface.

4. Appareil de communication selon l'une quelconque des revendications 1 à 3, dans lequel la première direction de polarisation est de -45° et la seconde direction de polarisation est de +45° ; ou la première direction de polarisation est une direction de polarisation horizontale, et la seconde direction de polarisation est une direction de polarisation verticale.

5. Appareil de communication selon l'une quelconque des revendications 1 à 4, dans lequel la valeur de mesure du signal est une puissance reçue de signal de référence, RSRP, un indicateur d'intensité de signal reçu, RSSI, ou un rapport signal sur interférence plus bruit, SINR.

6. Appareil de communication, comprenant un appareil d'antenne, l'appareil d'antenne comprenant M antennes, dans lequel les M antennes comprennent deux antennes omnidirectionnelles et 2 x L antennes à polarisation directionnelle, et L est un nombre entier supérieur à 0 ;
les deux antennes omnidirectionnelles sont réparties séparément sur deux surfaces latérales opposées d'un cube, et chaque antenne omnidirectionnelle est connectée à un port d'antenne ; et
les 2 x L antennes à polarisation directionnelle sont réparties uniformément sur les deux autres surfaces latérales du cube, les 2 x L antennes à polarisation directionnelle comprennent L antennes à polarisation directionnelle dans une première direction de polarisation et L antennes à polarisation directionnelle dans une seconde direction de polarisation, les L antennes à polarisation directionnelle dans la première direction de polarisation sont connectées à un port d'antenne après avoir été combinées, et les L antennes à polarisation directionnelle dans la seconde direction de polarisation sont connectées à un autre port d'antenne après avoir été combinées ; et
quatre ports d'antenne, dans lequel l'un des quatre ports d'antenne est connecté à une antenne omnidirectionnelle ou est connecté à L antennes à polarisation directionnelle dans une même direction de polarisation,
dans lequel l'appareil de communication comprend également un processeur (701), dans lequel
le processeur (701) est configuré pour obtenir P valeurs de mesure de signal qui sont obtenues séparément par la mesure de chaque antenne à polarisation directionnelle ou omnidirectionnelle des M antennes au cours d'une période de temps prédéfinie, où P est un nombre entier supérieur à 0 ; et
lorsqu'une valeur moyenne des P valeurs de mesure de signal correspondant à une antenne dans X antennes est supérieure à une somme d'une valeur moyenne de P valeurs de mesure de signal correspondant à une antenne dans une antenne d'émission actuellement utilisée par les appareils de communication et un premier seuil prédéfini, Y antennes avec une valeur moyenne maximale des P valeurs de mesure de signal dans les M antennes sont utilisées comme antenne d'émission,
dans lequel Y est inférieur ou égal à M et Y est supérieur ou égal à 1 ; les X antennes sont des antennes qui font partie des M antennes et qui sont autres que l'antenne d'émission actuellement utilisée par l'appareil de communication ; et X est un nombre entier supérieur à 0.

7. Appareil de communication selon la revendication 6, dans lequel l'appareil d'antenne comprend également des plaques de réflexion d'antenne configurées pour que les antennes à polarisation directionnelle soient situées dessus, dans lequel les plaques de réflexion d'antenne pour les 2 x L antennes à polarisation directionnelle sont indépendantes les unes des autres (figure 4 (a) à figure 4(e)).

8. Appareil de communication selon la revendication 6 ou la revendication 7, dans lequel les 2 x L antennes à polarisation directionnelle se superposent en totalité ou partiellement avec ou ne se superposent pas aux deux antennes omnidirectionnelles dans un espace de dimension verticale.

9. Appareil de communication selon l'une quelconque des revendications 6 à 8, dans lequel la première direction de polarisation est de -45° et la seconde direction de polarisation est de +45° ; ou la première direction de polarisation est une direction de polarisation horizontale, et la seconde direction de polarisation est une direction de polarisation verticale.

10. Appareil de communication selon la revendication 6, dans lequel les M antennes comprennent deux antennes omnidirectionnelles et 4 x L antennes à polarisation directionnelle, et L est un nombre entier supérieur à 0 ; les 4 x L antennes à polarisation directionnelle comprennent 2 x L antennes à polarisation directionnelle dans une première direction de polarisation et 2 x L antennes à polarisation directionnelle dans une seconde direction de polarisation ; et
les deux antennes omnidirectionnelles sont réparties séparément sur deux surfaces opposées d'un cube, et chaque antenne omnidirectionnelle est connectée à un port d'antenne ; et
les 4 x L antennes à polarisation directionnelle sont réparties uniformément sur quatre surfaces du cube, et les antennes à polarisation directionnelle dans une même direction de polarisation dans les 4 x L antennes à polarisation directionnelle sont connectées à un port d'antenne après avoir été combinées ; et
quatre ports d'antenne, dans lequel l'un des quatre ports d'antenne est connecté à une antenne omnidirectionnelle ou est connecté à 2 x L antennes à polarisation directionnelle dans une même direction de polarisation.

11. Appareil de communication selon la revendication 10, dans lequel M vaut 6 et L vaut 2 (figure 6(a) à figure 6(c)).

12. Appareil de communication selon la revendication 10 ou la revendication 11, dans lequel les 4 x L antennes à polarisation directionnelle se superposent en totalité ou partiellement avec ou ne se superposent pas aux deux antennes omnidirectionnelles dans un espace de dimension verticale.

13. Appareil de communication selon l'une quelconque des revendications 6 à 12, dans lequel la valeur de mesure du signal est une puissance reçue de signal de référence, RSRP, un indicateur d'intensité de signal reçu, RSSI, ou un rapport signal sur interférence plus bruit, SINR.
